# EUROPÄISCHE PATENTSCHRIFT

(11) **EP 2 808 965 B1**
(45) Veröffentlichungstag und Bekanntmachung des Hinweises auf die Patenterteilung: **19.09.2018**
(21) Anmeldenummer: 14169274.9
(22) Anmeldetag: 21.05.2014
(51) Int. Cl.: H02G 13/00

(54) **Anordnung zum Anschluss isolierter Ableitungen im äußeren Blitzschutz mit Potentialausgleich im Endverschlussbereich und trennungsabstandsgerechter Aufständerung**
Assembly for connecting insulated conductors in the outer lightning protection system with potential equalisation in end closure area and support system for proper separation distance
Agencement destiné à raccorder des dérivations isolées dans une protection anti-foudre externe ayant une compensation de potentiel dans une zone d'extrémité et support de montage adapté à une distance de séparation

(30) Priorität: 28.05.2013 DE 202013004927 U
(43) Veröffentlichungstag der Anmeldung: 03.12.2014
(73) Patentinhaber: DEHN + SÖHNE GMBH + CO KG, 92318 Neumarkt/Opf (DE)
(72) Erfinder: Rother, Claudia, 92318 Neumarkt (DE); Lang, Johanna, 92364 Deining (DE)
(74) Vertreter: Kruspig, Volkmar

(56) Entgegenhaltungen:
- DE-A1- 3 836 620
- DE-B- 1 088 568
- DE-B4-102006 056 563
- DE-U1- 20 207 416
- DE-U1-202004 007 977
- DE-U1-202008 001 258

## Beschreibung

Die Erfindung betrifft eine Anordnung zum Anschluss isolierter Ableitungen im äußeren Blitzschutz mit Potentialausgleich im Endverschlussbereich und trennungsabstandsgerechter Aufständerung gemäß Anspruch 1.

Beim Anschluss einer isolierten Ableitung an einer Ringleitung oder einer Attika eines Gebäudes ist es funktionsbedingt notwendig, dass die eingesetzte isolierte Ableitung, z.B. eine sogenannte HVI-Ableitung der Firma DEHN + SÖHNE GmbH + Co. KG, im Endverschlussbereich aufgeständert wird, um das für den jeweiligen ausgewiesenen Trennungsabstand erforderliche Isoliervermögen einhalten zu können.

Weiterhin muss eine gute und ausreichende Standfestigkeit sowie Verlegesicherheit gewährleistet werden. Durch das Aufständern isolierter Ableitungen mit Hilfe von an sich bekannten Distanzhaltern aus glasfaserverstärkten Kunststoffmaterialien wird im Endverschlussbereich die Feldsteuerung der isolierten Ableitung in nachteiliger Weise gestört. Hierdurch kann nur noch ein reduzierter Trennungsabstand eingehalten werden. Ursächlich für dieses Verhalten ist das vorzeitige Einsetzen von Gleitentladungen, insbesondere im nassen und/oder verschmutzten Zustand der Distanzhalter unter Hochspannungsbelastungen, wodurch ein vermindertes Isolationsvermögen entsteht und die entsprechende Blitzschutzanlage versagen kann.

Aus der DE 10 2006 056 563 B4 ist ein Distanzhalter zur Sicherstellung des Trennungsabstands für teilisolierte Blitzschutzanlagen vorbekannt. Dieser Distanzhalter umfasst ein Rohr, einen Stab, ein Profil oder Hohlprofil mit an den gegenüberliegenden Enden vorgesehenen Mitteln zum Befestigen jeweils der blitzstromführenden Leitung einerseits und Fixieren an der baulichen Anlage des zu schützenden Objekts andererseits. Mit Hilfe eines solchen Distanzhalters kann der benötigte Trennungsabstand zwischen der blitzstromführenden Leitung und dem zu schützenden Objekt der baulichen Anlage eingehalten werden.

Mit dem Distanzhalter nach DE 10 2006 056 563 B4 ist eine hohe Gleitentladungsfestigkeit gegeben und der Faktor zwischen der geometrischen Länge des Distanzhalter und der äquivalenten Luftstrecke verbessert. Diesbezüglich weist der Distanzhalter eine Beschichtung auf, welche eine gleichmäßige Feldverteilung bei blitztypischen hohen, kurzzeitigen Impulsspannungen gewährleistet. Diese Beschichtung besitzt halbleitende Eigenschaften bzw. ist halbleitfähig.

Durch die vorgesehene halbleitfähige Schicht bzw. das halbleitende Material verbessert sich die Gleitentladungsfestigkeit und damit der Faktor zwischen der geometrischen Länge des Distanzhalters und der äquivalenten Luftstrecke.

Weiterer Stand der Technik wird in DE 202 07 416 U1, DE 20 2004 007977 U1 und DE 20 2008 001258 U1 offenbart.

Aus dem Vorgenannten ist es daher Aufgabe der Erfindung, den Anschluss isolierter Ableitungen für den äußeren Blitzschutz an eine Ringleitung einer Attika eines Gebäudes oder dergleichen leitfähiger Teile so zu verbessern, dass einerseits eine sichere Aufständerung im Endverschlussbereich der isolierten Ableitung gegeben ist sowie andererseits das für den benötigten Trennungsabstand erforderliche Isoliervermögen unter allen Umständen eingehalten wird. Dabei gilt es darüber hinaus zu verhindern, dass durch die Aufständerung die optimale Feldsteuerung der isolierten Ableitung gestört wird und insofern Gleitentladungen sicher vermeidbar sind.

Die Lösung der Aufgabe der Erfindung erfolgt durch eine Anordnung gemäß der Merkmalskombination nach Anspruch 1, wobei die Unteransprüche mindestens zweckmäßige Ausgestaltungen und Weiterbildungen darstellen.

Diesbezüglich wird erfindungsgemäß eine isolierte, feldgesteuerte Aufständerung der eigentlichen isolierten Ableitung im Endverschlussbereich zum Einhalten des nötigen Trennungsabstands realisiert. Diesbezüglich kommt ein metallischer Halter als zusätzlicher Potentialausgleich im Endverschlussbereich zur Kontaktierung des halbleitend beschichteten oder halbleitenden Distanzstabs oder Distanzhalters zum Einsatz, der weiterhin am nicht blitzstrombehafteten Potentialausgleich angebunden wird.

Durch die vorstehende Maßnahme wird die Ausbildung von Gleitentladungen entlang der isolierten Ableitung und des eigentlichen Distanzhalters, vor allem auch im verschmutzten oder feuchten Zustand unterdrückt.

Durch den Einsatz eines halbleitend beschichteten oder halbleitenden Distanzhalters oder Distanzstabs kann die notwendige aufgeständerte Höhe reduziert werden. Die aufgeständerte Höhe entspricht hierbei dem geforderten bzw. berechneten Trennungsabstand am Installationsort, so dass eine einfache Dimensionierung unter Vermeidung von Fehlinstallationen gegeben ist.

Die Anordnung zum Anschluss isolierter Ableitungen im äußeren Blitzschutz mit Potentialausgleich im Endverschlussbereich und trennungsabstandsgerechter Aufständerung sieht also einen Distanzhalter vor, der zwischen dem Anschlusskopf der isolierten Ableitung und dem eigentlichen Potentialausgleichsanschluss vorgesehen ist.

Dieser Distanzhalter ist einerseits mit der isolierten Ableitung und andererseits mit dem Potentialausgleich in Verbindung stehend.

Der Distanzhalter kann dabei, wie in der DE 10 2006 056 563 B4 offenbart, als Distanzhalter in Form eines Rohres, Stabes, Profils oder Hohlprofils ausgebildet sein und an den gegenüberliegenden Enden vorgesehene Mittel zum Befestigen der isolierten Ableitung und zum Fixieren an der baulichen Anlage des zu schützenden Objekts besitzen.

Das Rohr, der Stab, das Profil oder das Hohlprofil besteht mindestens über Abschnitte seiner Längsausdehnung und mindestens an der Oberfläche aus einem Material oder weist eine Beschichtung auf, die halbleitende Eigenschaften besitzt und eine gleichmäßige Feldverteilung bei blitztypischen hohen, kurzzeitigen Impulsspannungen gewährleistet.

Das halbleitende Material oder die vorerwähnte Beschichtung kann einen ohmschen Widerstand im Bereich von einigen Ω/m bis MΩ/m, bevorzugt zwischen 500 Ω/m und 500 kΩ/m besitzen und galvanisch mit der isolierten Ableitung bzw. der Mittel zum Fixieren an der baulichen Anlage in Verbindung stehen.

Denkbar ist aber auch eine kapazitive Ankopplung mit der isolierten Ableitung bzw. den Mitteln zum Fixieren an der baulichen Anlage.

Das Basismaterial des Distanzhalters kann glasfaserverstärkter Kunststoff sein, der beispielsweise eine Beschichtung aus einem halbleitenden Material besitzt. Auch kann der Isolierstoff leitfähige Komponenten enthalten.

Der halbleitende oder halbleitende Eigenschaften aufweisende Distanzhalter ist mit seinem zur baulichen Anlage weisenden Ende in einen Sockel einsetzbar, welcher eine Verbindung zum Potentialausgleich, der nicht blitzstrombehaftet ist, umfasst.

Der Sockel wiederum ist in bevorzugter Weise Bestandteil eines Dreibeins oder eines ähnlichen stativartigen Gebildes, wobei das Dreibein eine Y-förmige metallische Konstruktion umfasst, welche einen leitfähigen, zweiten Distanzhalter zur Ausbildung des eigentlichen Potentialausgleichs aufnimmt.

Der Abstand zwischen den Befestigungspunkten des ersten, halbleitenden Distanzhalters und des zweiten, leitfähigen Distanzhalters am Dreibein bzw. der Y-förmigen metallischen Konstruktion ist veränderbar bzw. einstellbar.

Der zweite Distanzhalter kann längenvariabel, z.B. über eine Teleskopführung, ausgebildet sein.

Der oder die Distanzhalter besitzen jeweils eine leitfähige Klemmschelle oder dergleichen Mittel zum Aufnehmen der jeweiligen isolierten Ableitung.

Der halbleitende Distanzhalter besitzt eine leitfähige Klemmschelle, die mit dem halbleitenden Mantel der entsprechenden isolierten Ableitung in elektrischem Kontakt steht.

Der halbleitende Distanzhalter weist darüber hinaus eine Länge auf, die dem geforderten bzw. berechneten Trennungsabstand am jeweiligen Installationsort der entsprechenden baulichen Anlage entspricht.

Die Erfindung soll nachstehend anhand eines Ausführungsbeispiels sowie unter Zuhilfenahme von Figuren näher erläutert werden.

Hierbei zeigen:
- Fig. 1: Schnittdarstellungen des oberen A-A und unteren B-B Endes des ersten, halbleitenden Distanzhalters mit Klemmschelle zur Aufnahme der isolierten Ableitung und zu deren Kontaktierung sowie einer unteren Befestigungsbuchse, die zum Sockel bzw. Dreibein (siehe Fig. 2 und 3) reicht;
- Fig. 2: beispielhafte Darstellungen umgesetzter Trennungsabstände, wobei gilt Länge C1 = errechneter Trennungsabstand Aufbau 1 = Endverschlusslänge A1/2; Länge C2 = errechneter Trennungsabstand Aufbau 2 = Endverschlusslänge A2/2 und Länge D = 50 cm als beispielhafte feste Länge und
- Fig. 3: eine prinzipielle Ausgestaltung des Dreibeins mit drei Sockelsteinen oder Sockelkörpern, die die Enden der Dreibeinfüße aufnehmen, verschiedene Positionierungsvarianten hinsichtlich unterschiedlich realisierbare Abstände zwischen erstem und zweitem Distanzhalter und in den Details A bis E spezielle Ansichten von konstruktiven Einzelheiten der Dreibeinanordnung mit Distanzhaltern.

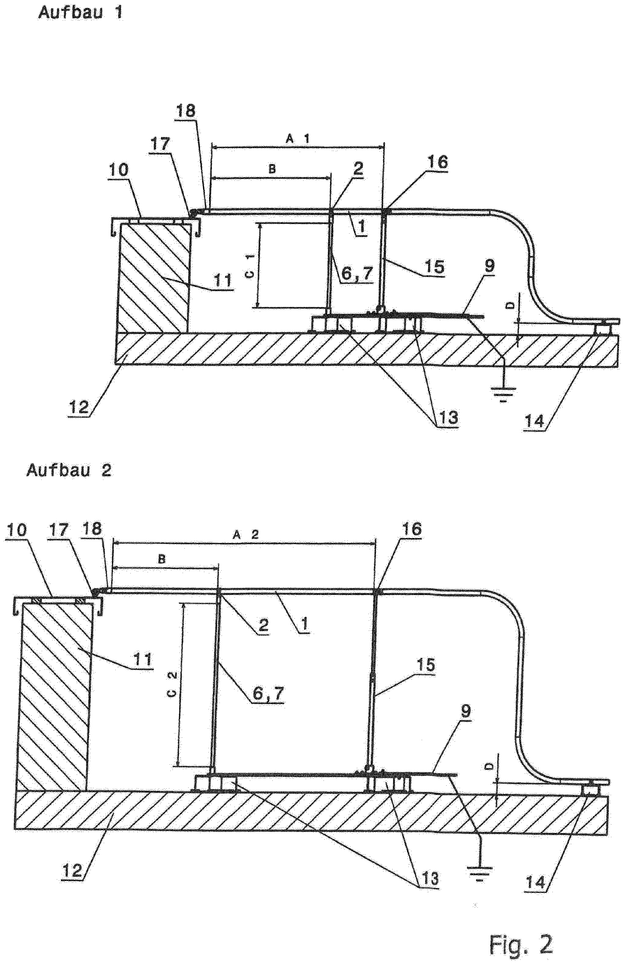

Um das Entstehen von Gleitentladungen zu unterdrücken, wird ein beschichteter, halbleitender Distanzhalter, ausgebildet als Distanzstab 6, mit einem Metallhalter, z.B. ausgebildet als Schelle 2, als zusätzlicher Potentialausgleich im Endverschlussbereich einer isolierten Ableitung (siehe auch Fig. 2) eingesetzt. Der Distanzstab 6 dient dabei gleichzeitig zur Aufständerung der isolierten Ableitung 1.

Um die entsprechende Standfestigkeit zu gewährleisten, wird der halbleitende Distanzstab 6 in einem dreibeinähnlichen Stativ 13 in einem Abstand von ca. 15 cm vom Anschlusskopf 18 der isolierten Ableitung 1 fixiert.

Dieses Dreibeinstativ 13 sieht darüber hinaus eine zweite Befestigungsmöglichkeit vor, die gleichzeitig als Anbindung für den notwendigen Potentialausgleichsanschluss der isolierten Ableitung 1 dient und welche den Endverschlussbereich der isolierten Ableitung 1 begrenzt, wobei die Länge des zweiten leitfähigen Distanzhalters 15, der vorzugsweise aus einem Metall besteht, variabel ist. Die entsprechend gewählte Länge des teleskopartig aus- oder eingefahrenen leitfähigen Distanzhalters 15 kann mit Hilfe von Klemmschrauben 19 fixiert werden.

Durch den Einsatz des dreibeinähnlichen Stativs 13, welches mit variabel verstellbaren Füßen 20 versehen ist, kann sowohl ein variabler Endverschlussbereich als auch ein gleichzeitiges Aufständern realisiert werden.

Bei der Montage ist lediglich eine Anpassung der Länge des halbleitend beschichteten glasfaserverstärkten Kunststoff-Distanzstabs 6 entsprechend dem errechneten Trennungsabstand erforderlich.

Für die Verwendung des zusätzlichen feldsteuernden Elements in Form des Distanzstabs 6 kann auf die übliche weitere Reduzierung des Trennungsabstands bei Verwendung herkömmlicher hochisolierter Stäbe verzichtet werden. Die eigentliche isolierte Ableitung 1 wird dann in der Höhe, die genau dem errechneten Trennungsabstand entspricht, aufgeständert.

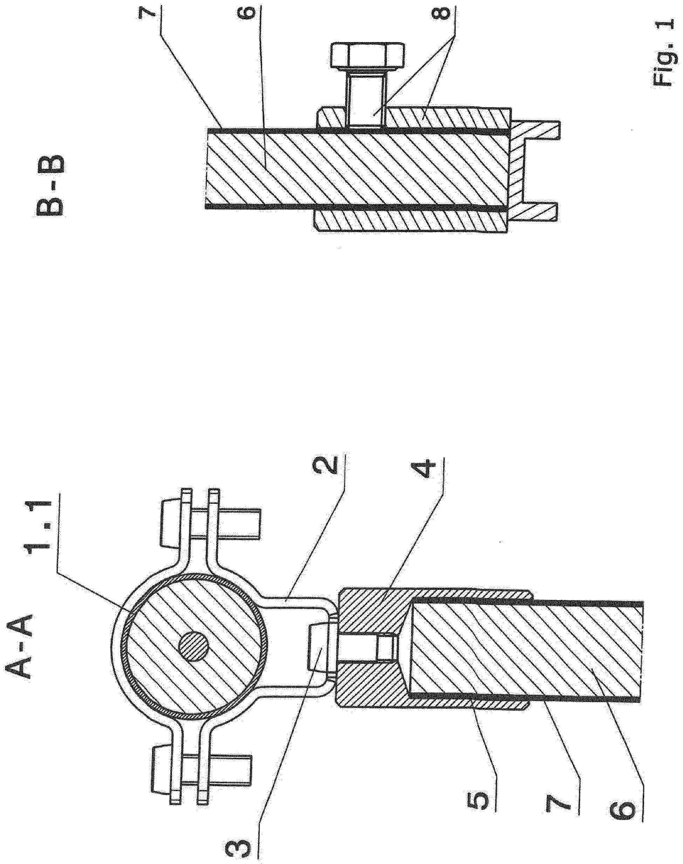

Die Schnittdarstellungen nach Fig. 1 zeigen den halbleitenden Mantel 1.1 der isolierten Ableitung 1 und den schellenartigen metallischen Halter 2. Der metallische Halter 2 ist über eine Schraubverbindung 3 mit einer oberen Buchse 4 verbunden. Der Distanzstab 6 weist eine halbleitende Schicht 7 auf und ist am oberen Ende von einer leitfähigen Kappe 5 umfasst, die Bestandteil der oberen Buchse 4 sein kann.

Das untere Ende des Distanzstabs 6 mit halbleitender Schicht 7 wird von der unteren Buchse 8 aufgenommen, die über eine Klemmarretierung verfügt.

Die verschiedenen beispielhaften möglichen Aufbauten der aufgeständert verlegten isolierten Ableitung 1 nach Fig. 2 gehen von einem zu schützenden Objekt 12 aus, auf dem Sockel 13 mit entsprechender Unterlegplatte als Halteeinheit für ein Dreibein befindlich sind. Weitere Halter 14 nehmen Abschnitte der isolierten Ableitung 1 auf.

Eine Metallattika 10 ist über eine Anschlusslasche 17 mit dem Leiter der isolierten Ableitung 1 verbunden. Diesbezüglich ist ein Anschlusskopf 18 ausgebildet.

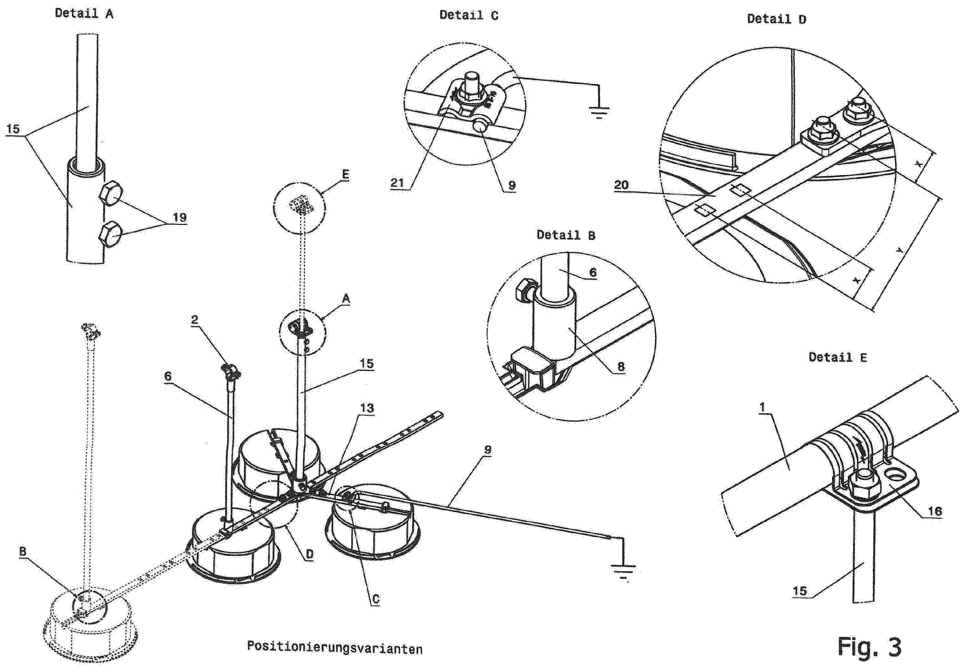

Der Abstand des ersten Distanzhalters oder Distanzstabs 6 vom zweiten, leitfähigen Distanzstab 15 ist über die Ausgestaltung der Dreibeinanordnung (siehe Fig. 3) variabel. Die Fig. 2 zeigt weiterhin die Potentialausgleichsanschlussleitung 9 und eine Gebäudewand 11 des zu schützenden Objekts 12.

Der prinzipielle Aufbau eines Dreibeins zur Aufnahme des ersten und zweiten Distanzhalters 6; 15 ist in der perspektivischen Darstellung nach Fig. 3 und den entsprechenden Detaildarstellungen gezeigt.

Das Dreibein ist als im Wesentlichen Y-förmige metallische Konstruktion realisiert. Der leitfähige Distanzhalter 15 ist, wie in der Fig. 3, Detail A gezeigt, teleskopartig ausgebildet, mit einem inneren Rohrelement, das in einem äußeren Rohrelement geführt ist, versehen und mit Hilfe von Feststellschrauben 19 bezüglich des Längen- oder Höhenmaßes festlegbar.

Das untere Ende des variabel einstellbaren leitfähigen Distanzhalters 15 wird von einer Buchse aufgenommen und steht leitfähig mit der Metallkonstruktion des Y-förmigen Dreibeins in Verbindung.

Der Distanzhalter mit halbleitenden Eigenschaften 6 ist, wie im Detail B gezeigt, ebenfalls von einer unteren Buchse 8 aufgenommen, wobei die untere Buchse 8 auf einem Element 20 der Y-Konstruktion des Dreibeins montiert ist.

Der Abstand zwischen den jeweiligen Buchsen zur Aufnahme des ersten, halbleitenden Distanzhalters 6 und des zweiten, leitfähigen Distanzhalters 15 ist variabel. Hier können entsprechende Aussparungen (siehe Detail D) in einer entsprechenden Stangenkonstruktion vorhanden sein oder aber es ist eine Hohlprofilführung mit entsprechenden Rast- und Klemmelementen oder eine ähnliche Verstellmöglichkeit denkbar.

Der Potentialausgleich zur Anschlussleitung 9 wird an einem Fußteil der Y-förmigen Metallkonstruktion beispielsweise mit Hilfe eines sogenannten Doppelüberlegers als Klemm-Halbschelle realisiert.

Das Potentialausgleichsanschlusselement 16 am variabel einstellbaren, leitfähigen Distanzhalter 15 weist die Form einer Schelle auf und umgreift diesbezüglich die isolierte Ableitung 1.

## Patentansprüche

1. Anordnung zum Anschluss isolierter Ableitungen (1) im äußeren Blitzschutz mit Potentialausgleich (9) im Endverschlussbereich und trennungsabstandsgerechter Aufständerung, mit einem Distanzhalter (6), der ein Rohr, Stab, Profil oder Hohlprofil mit an den gegenüberliegenden Enden vorgesehenen Mitteln (2; 3; 4; 5; 8) zum Befestigen der isolierten Ableitung (1) und Fixieren an einer baulichen Anlage (12) des zu schützenden Objekts ist, weiterhin das Rohr, der Stab, das Profil oder das Hohlprofil mindestens über Abschnitte seiner Längenausdehnung und mindestens an der Oberfläche aus einem Material besteht und/oder eine Beschichtung aufweist, die halbleitende Eigenschaften besitzt und eine gleichmäßige Feldverteilung bei blitztypischen hohen, kurzzeitigen Impulsspannungen gewährleistet, zwischen einem Anschlusskopf (18) der isolierten Ableitung (1) und einem Potentialausgleichsanschluss der halbleitende Distanzhalter (6) im Endverschlussbereich der isolierten Ableitung (1) vorgesehen ist, wobei der halbleitende Distanzhalter (6) einerseits mit dem halbleitenden Mantel (1.1) der isolierten Ableitung (1) und andererseits mit dem Potentialausgleich (9) in Verbindung steht, **dadurch gekennzeichnet, dass** weiterhin in Abstand zum halbleitenden Distanzhalter (6) ein leitfähiger Distanzhalter (15) vorgesehen und dieser Abstand zwischen dem halbleitenden und dem leitfähigen Distanzhalter (6; 15) einstellbar ist sowie der leitfähige Distanzhalter (15) ein Potentialausgleichselement (16) in Form einer Schelle aufweist, welche die isolierte Ableitung (1) umgreift,
weiterhin der halbleitende Distanzhalter (6) mit seinem zur baulichen Anlage (12) weisenden Ende in einen Sockel (13) eingesetzt ist, welcher eine Verbindung zum Potentialausgleich (9) umfasst, der Sockel (13) Bestandteil eines Dreibeins ist, wobei das Dreibein eine Y-förmige metallische Konstruktion umfasst, welche den leitfähigen Distanzhalter (15) zur Ausbildung des Potentialausgleichs aufnimmt, wobei der Abstand zwischen den Befestigungspunkten der Distanzhalter (6; 15) an der Y-förmigen metallischen Konstruktion veränderbar oder einstellbar ist.

2. Anordnung nach Anspruch 1,
**dadurch gekennzeichnet, dass**
der leitfähige Distanzhalter (15) längen- bzw. höhenvariabel ist.

3. Anordnung nach einem der vorangegangenen Ansprüche,
**dadurch gekennzeichnet, dass**
der oder die Distanzhalter (6; 15) jeweils eine leitfähige Klemmschelle zum Aufnehmen der jeweiligen isolierten Ableitung (1) besitzen,

4. Anordnung nach einem der vorangegangenen Ansprüche,
**dadurch gekennzeichnet, dass**
der halbleitende Distanzhalter (6) eine Länge besitzt, die dem erforderlichen bzw. berechneten Trennungsabstand am jeweiligen Installationsort entspricht.

## Claims

1. An assembly for connecting insulated down-conductors (1) in the outer lightning protection with a potential equalization means (9) in the end closure area and a support system for proper separation distance, having a spacer (6) which is a tube, rod, profile or hollow profile having means (2; 3; 4; 5; 8) provided at the opposite ends for attaching the insulated down-conductor(1) and fixing to a structural installation (12) of the object to be protected, furthermore the tube, rod, profile or hollow profile, at least over sections of its longitudinal extension and at least at the upper surface, is composed of a material and/or features a coating which has semiconducting properties and guarantees a uniform field distribution in the event of lightning-typical, high, short-term pulse voltages, the semiconducting spacer (6) being provided in the end closure area of the insulated down-conductor (1) between a connecting head (18) of the insulated down-conductor (1) and a potential equalization connection, wherein the semiconducting spacer (6) is associated with the semiconducting sheath (1.1) of the insulated down-conductor (1), on the one hand, and with the potential equalization means (9), on the other,
**characterized in that**
a conductive spacer (15) is furthermore provided at a distance to the semiconducting spacer (6), and said distance between the semiconducting spacer and the conductive spacer (6; 15) is settable, and the conductive spacer (15) features a potential equalization element (16) in the form of a clamp encompassing the isolated down-conductor (1), the semiconducting spacer (6), with its end pointing toward the structural installation, is furthermore inserted into a base (13) which comprises a connection to the potential equalization means (9), the base (13) is a component of a tripod, wherein the tripod comprises a Y-shaped metallic construction receiving the conductive spacer (15) for forming the potential equalization means, wherein the distance between the attachment points of the spacers (6; 15) on the Y-shaped metallic construction is modifiable or settable.

2. The assembly according to claim 1,
**characterized in that**
the conductive spacer (15) is variable in length or height.

3. The assembly according to anyone of the preceding claims,
**characterized in that**
the or each spacer (6; 15) respectively have a conductive clamp for receiving the respective insulated down-conductor (1).

4. The assembly according to any one of the preceding claims,
**characterized in that**
the semiconducting spacer (6) has a length corresponding to the required or calculated separation distance at the respective installation site.

## Revendications

1. Agencement destiné à raccorder des descentes isolées (1) dans la protection anti-foudre extérieure ayant une compensation de potentiel (9) dans la zone de terminaison et un support de montage adapté à une distance de séparation, comportant un élément écarteur (6) qui est un tube, un barreau, un profilé ou un profilé creux ayant des moyens (2 ; 3 ; 4 ; 5 ; 8) prévus aux extrémités opposées et destinés à attacher la descente isolée (1) et à la fixer sur une installation structurelle (12) de l'objet à protéger, et au moins sur des portions de son extension en longueur et au moins sur la surface le tube, le barreau, le profilé ou le profilé creux est constitué en un matériau et/ou présente un revêtement qui possède des propriétés semiconductrices et assure une répartition régulière du champ lors de tensions impulsionnelles élevées de courte durée, typiques pour la foudre,
dans lequel
entre une tête de raccordement (18) de la descente isolée (1) et un raccord de compensation de potentiel, l'élément écarteur semi-conducteur (6) est prévu dans la zone de terminaison de la descente isolée (1),
l'élément écarteur semi-conducteur (6) est en liaison d'une part avec la gaine semi-conductrice (1.1) de la descente isolée (1) et d'autre part avec la compensation de potentiel (9),
**caractérisé en ce que**
il est prévu en outre un élément écarteur conducteur (15) à distance de l'élément écarteur semi-conducteur (6), et cette distance entre les éléments écarteurs semi-conducteur et conducteur (6 ; 15) est réglable et l'élément écarteur conducteur (15) présente un élément de compensation de potentiel (16) sous la forme d'un collier qui entoure la descente isolée (1), et de plus par son extrémité dirigée vers l'installation structurelle (12) l'élément écarteur semi-conducteur (6) est inséré dans un socle (13) qui comprend une liaison vers la compensation de potentiel (9), le socle (13) faisant partie d'un trépied, le trépied comprenant une construction métallique en forme de Y qui reçoit l'élément écarteur conducteur (15) pour réaliser la compensation de potentiel, la distance entre les points de fixation des éléments écarteurs (6 ; 15) sur la construction métallique en forme de Y étant variable ou réglable.

2. Agencement selon la revendication 1,
**caractérisé en ce que**
l'élément écarteur conducteur (15) est variable en longueur ou en hauteur.

3. Agencement selon l'une des revendications précédentes,
**caractérisé en ce que**
le ou les éléments écarteurs (6 ; 15) possède(nt) chacun un collier de serrage conducteur pour recevoir la descente isolée respective (1).

4. Agencement selon l'une des revendications précédentes,
**caractérisé en ce que**
l'élément écarteur semi-conducteur (6) possède une longueur qui correspond à la distance de séparation requise ou calculée au site d'installation respectif.
